(19) Europäisches Patentamt
European Patent Office
Office européen des brevets

(11) Veröffentlichungsnummer: **0 035 172**
**A2**

(12) **EUROPÄISCHE PATENTANMELDUNG**

(21) Anmeldenummer: **81101161.8**

(22) Anmeldetag: **19.02.81**

(51) Int. Cl.³: **D 06 P 3/30**, D 06 P 1/02, C 09 B 29/42, C 09 B 29/52

(30) Priorität: **29.02.80 DE 3007628**

(43) Veröffentlichungstag der Anmeldung: **09.09.81 Patentblatt 81/36**

(84) Benannte Vertragsstaaten: **CH DE FR GB IT LI**

(71) Anmelder: **BASF Aktiengesellschaft, Carl-Bosch-Strasse 38, D-6700 Ludwigshafen (DE)**

(72) Erfinder: **Nungesser, Thilo, Dr., August-Bebel-Strasse 116, D-6800 Mannheim (DE)**
Erfinder: **Lamm, Gunther, Dr., Heinrich-Heine-Strasse 7, D-6733 Hassloch (DE)**

(54) **Verfahren zum Färben der Wolle von Pelzfellen.**

(57) Die Erfindung betrifft ein Verfahren zum Färben der Wolle von Pelzfellen mit Farbstoffen der Formel

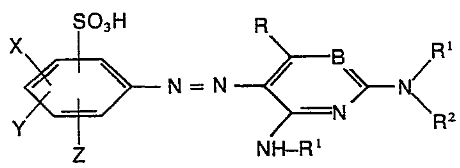

in der

B 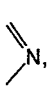 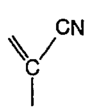 oder 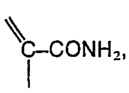

R Wasserstoff, Methyl, Äthyl, $NHR^3$, Propyl, die Reste
$R^3$ Wasserstoff, Methyl, Äthyl, n- und i-Propyl, n- und i-Butyl, Methoxyäthyl, Äthoxyäthyl, Butoxyäthyl, Methoxypropyl und Äthoxypropyl,
X Wasserstoff, Chlor, Brom, Nitro, Cyan, $C_1$- bis $C_8$-Alkylsulfonyl, Phenylsulfonyl, Chlorphenylsulfonyl, Tolylsulfonyl, Trifluormethyl, Carboxyl, Methyl, Äthyl, Methoxy, Äthoxy, einen Rest der Formel 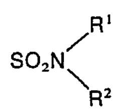 Sulfonsäurearylester, gegebenenfalls substituiertes Oxdiazolyl oder Carbonsäureester mit 1 bis 6 C-Atomen im Alkoholrest,
Y Wasserstoff, Chlor, Brom, Methyl oder Methoxy und
Z Wasserstoff, Chlor oder Methyl und
$R^1$ und $R^2$ gegebenenfalls substituierte Alkyl-, Alkenyl- oder Cycloalkylreste oder zusammen mit dem Stickstoff einen heterocyclischen Rest bedeuten.

EP 0 035 172 A2

Verfahren zum Färben der Wolle von Pelzfellen

Zum Färben der Haare von Pelzfellen werden bekanntlich Farbstoffe sehr unterschiedlicher chemischer Struktur verwendet. Es gibt keine Farbstoffgruppe, die unter den speziellen Färbebedingungen der Pelzfärberei für die Vielzahl der Pelzfellarten allen heutigen Anforderungen universell gerecht wird.

Die älteste Art der heute nur noch in Spezialfällen durchgeführten Färbung besteht im Färben mit pflanzlichen Extrakten wie Blau-, Gelb- und Rotholz. - Bei den um 1890 entdeckten Oxidationsfarbstoffen handelt es sich nicht um eigentliche Farbstoffe, sondern um Chemikalien (aromatische Amine und Hydroxiverbindungen wie p-Phenylendiamin, Resorcin, Aminophenole, Naphthalin-Derivate), aus denen erst durch Oxidation mit Wasserstoffperoxid und Umsetzung mit Metallsalzen (Chrom, Kupfer, Eisen) ein Farbstoff-Pigment im Haar gebildet wird. Mittels dieser heute noch sehr verbreiteten Farbstoffgruppe erzielt man auf allen Pelzfellarten schon bei niedriger Färbetemperatur egale Pigmentfärbungen. Die Nuancen beschränken sich allerdings auf gedeckte Töne von Gelb über Orange, Braun, Blaugrau, Grau nach Schwarz, wie sie die Haare der in der Natur lebenden Pelztiere (Wildware) aufweisen; leuchtende, brillante Farbtöne oder andere als die zuvor genannten Nuancen lassen sich mit Oxidationsfarbstoffen nicht erreichen. Beim Färben mit diesen Produkten müssen die Färbebedingungen exakt eingehalten werden; die Färbedauer ist lang, die Färbungen selbst sind in hellen Nuancen nicht lichtecht.

Bg/BL

Auch mit synthetischen Farbstoffen versuchte man bald nach ihrer Entdeckung, die Haare von Pelzfellen zu färben. Die Anwendung dieser meist aus Textilsortimenten stammenden Farbstoffe ist allerdings vorwiegend auf das Färben von Lamm-, Schaf- oder Kaninfellen beschränkt. Harthaariges Fellmaterial wird nicht oder nur ungenügend angefärbt, bei Fellarten mit mehreren Haarsorten (Wildware) wird nur die Unterwolle in stärkerem Maße gefärbt. Da synthetische Farbstoffe im allgemeinen erst bei höheren Färbetemperaturen auf die Haare aufziehen, müssen die Pelzfelle mit Chromsalzen gegerbt oder nachgegerbt vorliegen, so daß die Schrumpftemperatur des Pelzleders mindestens 20 °C über der Färbetemperatur von 60 - 65 °C liegt; auch sollte diese Färbetemperatur während des gesamten Färbeprozesses beibehalten werden. Mit ausgewählten synthetischen Farbstoffen können sämtliche Bunttöne in relativ einfacher Färbeweise nach dem Badverfahren in wesentlich kürzerer Zeit als bei den eingangs erwähnten Färbemitteln erzielt werden.

Aus der großen Zahl synthetischer Farbstoffe eignen sich vor allem 3 Gruppen für die Färbung von Pelzfellen:

Dispersionsfarbstoffe sind gut kombinierbar, ziehen schon bei etwas niedrigerer Färbetemperatur und geben egale Färbungen, jedoch sind diese etwas fettempfindlich, weisen nur eine mittlere Licht- und ungenügende Nachbügelechtheit auf und neigen von der Lederseite her zum Abfärben auf Kunststoffmaterialien. Sie werden vorzugsweise als Schönungsfarbstoffe bei der Färbung mit Oxidationsfarbstoffen und als sog. Blendfarbstoffe für Edelpelzfelle eingesetzt.

Farbstoffe vom Typ der 1 : 2-Metallkomplexe werden häufig zum Färben von Lamm- und Schaffellen für Autositze und Bekleidung verwendet. Die gut kombinierbaren Farbstoffe ergeben gut licht- und nachbügelechte Färbungen; dunkle Farbtöne können jedoch nur mit Hilfe von sog. Carriern erreicht werden, und es besteht bei dunklen Farbtönen die Gefahr des Abfärbens der Pelzlederseite auf Kunststoffmaterialien.

Zunehmend an Bedeutung gewinnt das Färben der Haare von Pelzfellen mit wasserlöslichen anionischen Farbstoffen ("Säurefarbstoffen"). Aus der Vielzahl der für die Färbung von Wolle und Polyamid in der Textilfärberei geeigneten anionischen Farbstoffe kommt jedoch nur eine begrenzte Anzahl einfach gebauter Typen, meist Monoazo-, Nitro- oder Anthrachinon-Farbstoffe in Betracht, da in der Pelzfärberei unter anderen Färbebedingungen, insbesondere bezüglich der Färbetemperatur, gearbeitet werden muß als bei Textilgut. Die Einsatzmöglichkeiten dieser Farbstoffe für das Färben der Haare von Pelzfellen werden weiterhin dadurch eingeengt, daß die meisten dieser ausgewählten anionischen Farbstoffe wegen ihres zu unterschiedlichen Aufziehvermögens bei Temperaturen bis ca. 60 °C nur als Einzelfarbstoffe, jedoch nicht in Kombinationen eingesetzt werden können und daher für das sog. Trichromie-Färbeverfahren nicht in Frage kommen. Prinzip dieser Färbemethode ist es, sämtliche Farbtöne aus den 3 Grundfarben Gelb, Rot (bzw. Orange) und Blau unter den gegebenen Färbebedingungen in guter Egalität einzustellen zu können.

Praktisch kommen nur einige wenige anionische Farbstoffe den speziellen Anforderungen sehr nahe, die an die Färbung der Wolle von Pelzfellen gestellt werden müssen. Zu diesen Voraussetzungen zählen:

- gutes Aufziehvermögen bei 60 - 65 °C
- gute Kombinierbarkeit bei dieser Färbetemperatur
- geringe Lederanfärbung
- ähnliche Echtheitseigenschaften der Einzelfarbstoffe.

Eine geringe Lederanfärbung ist deswegen wichtig, weil niedermolekulare Säurefarbstoffe, welche das Pelzleder stark anfärben, meist zum Ausbluten neigen und durch umständliche Spülprozesse nach dem Färben entfernt werden müssen.

Für das Trichromie-Färbeverfahren der Haare von Pelzfellen mit ausgewählten anionischen Farbstoffen werden in der Praxis vor allem folgende Komponenten verwendet:

Blau: C.I. 62 045, 62 055, 62 085, vorzugsweise 62 055
Gelb: C.I. 10 385, 13 065, 13 090, 18 835, vorzugsweise 10 385
Rot: C.I. 14 690, 14 710, 15 510, 15 575, 15 620

Nach praxisüblicher "Tötung" der Haare mittels Alkalien und Netzmitteln können durch Kombination vorstehend genannter 3 Grundkomponenten alle praktisch verlangten Nuancen eingestellt werden. Die Färbung wird nach dem Badverfahren in Haspeln, Fellwenden, Fässern, Mixern oder Färbemaschinen durchgeführt. Den Färbebädern werden Färbereihilfsmittel vorzugsweise farbstoffaffiner

Art wie Oxethylierungsprodukte verschiedenster Konstitution, vor allem von Fettaminen, ferner ein- oder mehrbasische Säuren oder als Säurespender wirkende Substanzen zugesetzt. Auch der Zusatz von anorganischen oder organischen Neutralsalzen, wie z. B. Natriumchlorid, Natriumsulfat, Harnstoff, Dextrin sowie von puffernd wirkenden Salzgemischen, ist praxisüblich.

Gravierender Nachteil bei diesem Trichromie-Färbeverfahren für das Färben der Wolle von Pelzfellen ist jedoch die völlig unzureichende Lichtechtheit der unter "Rot" genannten Komponenten. Dies gilt nicht nur für helle bis mittlere Farbtöne, sondern auch für dunkle Braun- oder Grau-Nuancen, bei denen der Rotanteil in der Mischung häufig nicht sehr hoch ist. Bei Belichtung solcher Färbungen werden durch Verschwinden der Rotkomponente krasse Farbtonverschiebungen erhalten, die das damit gefärbte Fellmaterial unbrauchbar machen.

Es wurde nun gefunden, daß man Pelze einwandfrei färben kann, wenn man Farbstoffe verwendet, die in Form der freien Säuren der allgemeinen Formel

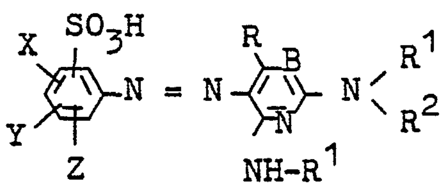

entsprechen, in der

B 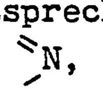, 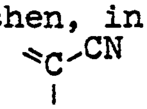 oder 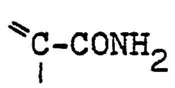,

R Wasserstoff, Methyl, Äthyl, $NHR^3$, Propyl, die Reste

$R^3$ Wasserstoff, Methyl, Äthyl, n- und i-Propyl, n- und i-Butyl, Methoxyäthyl, Äthoxyäthyl, Butoxyäthyl, Methoxypropyl und Äthoxypropyl,

$R^1$ gegebenenfalls durch Sauerstoff unterbrochenes und durch Hydroxy, $C_1$- bis $C_4$-Alkoxy, Carboxy, $C_1$- bis $C_8$-Alkoxycarbonyl, $C_1$- bis $C_8$-Alkanoyloxy, Cyan, $C_1$- bis $C_8$-Alkanoylamino, Cyclohexyl oder Phenyl substituiertes $C_1$- bis $C_8$-Alkyl, Allyl, Cycloalkyl, Norbornyl, $\omega$-Pyrrolidino-$C_2$- bis $C_6$-alkyl, Phenyl-$C_1$- bis $C_4$-alkyl, Tolyl-$C_1$- bis $C_4$-alkyl,

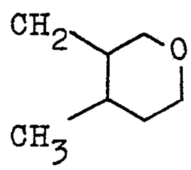 , 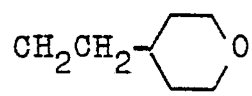

oder $CH_2CHC_6H_5$,
OH

ein Rest $R^1$ auch Wasserstoff, Phenyl, Tolyl, Methoxyphenyl, Äthoxyphenyl oder Dimethylphenyl,

$R^2$ Wasserstoff, Methyl, Äthyl, Hydroxyäthyl oder $C_2$- bis $C_4$-Alkoxyalkyl,

$R^1$ und $R^2$ zusammen mit dem Stickstoff Pyrrolidino, Piperidino, Morpholino, Piperazino, N-Methylpiperazino, N-ß-Hydroxyäthylpiperazino oder N-Acetylpiperazino,

X Wasserstoff, Chlor, Brom, Nitro, Cyan, $C_1$- bis $C_8$-Alkylsulfonyl, Phenylsulfonyl, Chlorphenylsulfonyl, Tolylsulfonyl, Trifluormethyl, Carboxyl, Methyl, Äthyl, Methoxy, Äthoxy, einen Rest der Formel

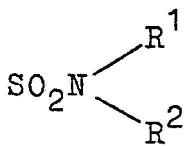 , Sulfonsäurearylester, gegebenenfalls substituiertes Oxdiazolyl oder Carbonsäureester mit 1 bis 6 C-Atomen im Alkoholrest,

Y Wasserstoff, Chlor, Brom, Methyl oder Methoxy und

Z Wasserstoff, Chlor oder Methyl

bedeuten.

Einzelne Reste $R^1$ und $R^2$ (soweit unter die allgemeine Definition fallend) sind außer den schon genannten z. B.

1. gegebenenfalls substituierte Alkylreste:

$CH_3$, $C_2H_5$, n- oder i-$C_3H_7$, n- oder i-$C_4H_9$, $C_6H_{13}$,

$CH_2CH_2OH$, $(CH_2)_3OH$, $CH_2\underset{CH_3}{C}HOH$, $\underset{CH_3}{C}H-CH_2OH$, $(CH_2)_4OH$,

$(CH_2)_6OH$, $\underset{CH_3}{C}H-(CH_2)_3\underset{OH}{C}(CH_3)_2$, $(CH_2)_2O(CH_2)_2OH$,

$(CH_2)_3O(CH_2)_4OH$, $(CH_2)_3OC_2H_4OH$, $(CH_2)_2CN$, $(CH_2)_5CN$,

$(CH_2)_6CN$, $(CH_2)_7CN$, $(CH_2)_2O(CH_2)_2CN$,

$(CH_2)_3O(CH_2)_2CN$, $(CH_2)_2O(CH_2)_2O(CH_2)_2CN$,

$(CH_2)_3OC_2H_4OCH_3$, $(CH_2)_3OC_2H_4OC_2H_5$, $(CH_2)_3O(CH_2)_6OH$,

$(CH_2)_3OC_2H_4OCH(CH_3)_2$, $(CH_2)_3OC_2H_4OC_4H_9$,

$(CH_2)_3OC_2H_4OCH_2C_6H_5$, $(CH_2)_3OC_2H_4O-$ 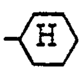 ,

$(CH_2)_3OC_2H_4OC_6H_5$, $(CH_2)_3O\underset{CH_3}{C}H-CH_2OCH_3$,

$(CH_2)_3O\underset{CH_3}{C}HCH_2OC_4H_9$, $(CH_2)_3OCH_2\underset{CH_3}{C}HOCH_3$,

$(CH_2)_3O\underset{CH_3}{C}HCH_2OC_2H_5$,

die entsprechenden Reste, bei denen die Gruppierungen $-OC_2H_4-$, $-OCH_2\underset{CH_3}{C}H-$ oder $-O\underset{CH_3}{C}H-CH_2-$ zwei- oder dreimal vorhanden sind;

$CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $(CH_2)_3OCH_2C_6H_5$, $(CH_2)_3OC_2H_4C_6H_5$, $(CH_2)_3OC_6H_5$, $(CH_2)_2OC_6H_5$, $-\underset{CH_3}{\underset{|}{C}}HCH_2OCH_3$, $\underset{CH_3}{\underset{|}{C}}HCH_2OC_4H_9$, $\underset{CH_3}{\underset{|}{C}}HCH_2OC_6H_5$, $CH_2\underset{CH_3}{\underset{|}{C}}HOCH_3$, $CH_2\underset{CH_3}{\underset{|}{C}}H-OC_2H_5$, $CH_2\underset{CH_3}{\underset{|}{C}}H-OC_4H_9$, $CH_2\underset{CH_3}{\underset{|}{C}}H-OC_6H_5$.

2. gegebenenfalls substituierte Cycloalkylreste:

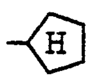 , 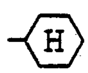 , 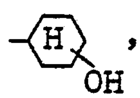 , 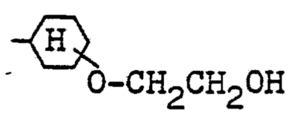 , 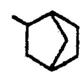 ,

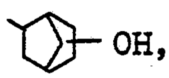, 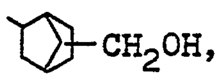, 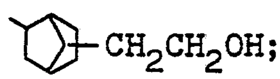;

3. Aralkylreste:
$CH_2C_6H_5$, $C_2H_4C_6H_5$, $CH_2\underset{OH}{\underset{|}{C}}H-C_6H_5$ sowie $C_6H_4CH_3$ anstelle von $C_6H_5$;

4. gegebenenfalls substituierte Phenylreste:
$C_6H_5$, $C_6H_4CH_3$, $C_6H_4OCH_3$, $C_6H_4OC_2H_5$.

5. $CH_2CH{=}CH_2$, $(CH_2)_2COOH$, $(CH_2)_5COOH$ und $(CH_2)_n$- 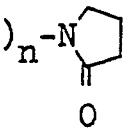 , wobei n = 2, 3, 4 oder 6 ist, $C_2H_4OCHO$, $C_2H_4OCOCH_3$, $(C_2H_4O)_2COCH_3$, $(C_2H_4O)_2CHO$, $(CH_2)_3OCOCH_3$, $(CH_2)_3OCHO$, $CH_2CH_2COOCH_3$, $CH_2CH_2COOC_2H_5$.

Bevorzugte Substituenten $R^1$ und $R^2$ sind beispielsweise: Wasserstoff, $CH_3$, $C_2H_5$, n- oder i-$C_3H_7$, n- oder i-$C_4H_9$, $CH_2CH_2OH$, $(CH_2)_3OH$, $CH_2CH(CH_3)OH$, $(CH_2)_4OH$, $(CH_2)_6OH$, $(CH_2)_2O(CH_2)_2OH$, $(CH_2)_3O(CH_2)_2OH$, $(CH_2)_3O(CH_2)_4OH$, 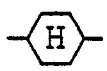 - OH, $(CH_2)_n$- 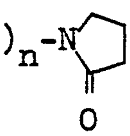 (n = 2, 3), $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OCH_2$ 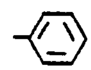 , $(CH_2)_3O$ 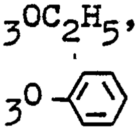 , $(CH_2)_2O$ 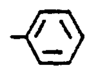 , $(CH_2)_3OC_2H_4OCH_3$, $(CH_2)_3OC_2H_4OC_4H_9$, $(CH_2)_3OC_2H_4OC_6H_5$, 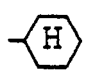 , 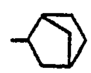 , $CH_2CH_2OCHO$, $CH_2CH_2OCOCH_3$, $CH_2CH(CH_3)$-OCHO, $CH_2CH(CH_3)OCOCH_3$, $(C_2H_4O)_2CH_3$ oder $(C_2H_4O)_3CH_3$.

Zur Herstellung der Farbstoffe der Formel I kann man eine Diazoniumverbindung von Aminen der Formel

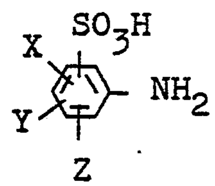

mit einer Kupplungskomponente der Formel

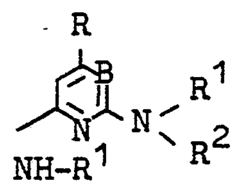

umsetzen. Diazotierung und Kupplung erfolgen dabei nach bekannten Methoden.

Die erfindungsgemäß zu verwendenden Farbstoffe sind überraschenderweise sehr gut mit den im Handel befindlichen gelben und blauen sowie roten Pelzfarbstoffen kombinierbar und ergeben Färbungen in jeder gewünschten Farbtiefe bei minimaler Färbung des Leders. Insbesondere sind die vorzüglichen Lichtechtheiten der Farbstoffe auf Pelz zu erwähnen auch und gerade in Kombination mit den gelben und blauen Pelzfarbstoffen des Handels. Die neuen Farbstoffzubereitungen enthalten in der Regel neben blauem Farbstoff eine Gelb- und eine Rotkomponente sowie Stellmittel (z. B. Natriumsulfat, Natriumchlorid oder Dextrin) und gegebenenfalls Dispergier- und Entstaubungsmittel. Sie werden üblicherweise durch Mischen der Bestandteile eingestellt.

Von besonderer technischer Bedeutung sind Farbstoffe der Formel

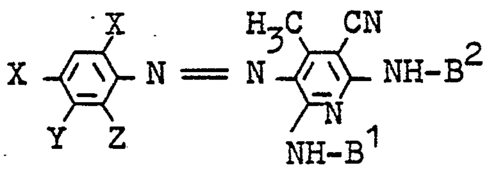

in der

$B^1$ Wasserstoff, $CH_3$, $C_2H_5$, $C_3H_7(n)$, $C_3H_7(i)$, $C_4H_9$, $CH(CH_3)-C_2H_5$, $CH_2CH_2OCH_3$, $CH_2CH_2OC_2H_5$, $CH_2CH_2CH_2OCH_3$, $CH_2CH_2CH_2OC_2H_5$, $(CH_2)_3O(CH_2)_2OCH_3$, $(CH_2)_3O(CH_2)_2OC_2H_5$, $(CH_2)_3O(CH_2)_2OC_4H_9$, $CH_2CH_2OH$, $CH_2CH_2CH_2OH$, $CH_2CH(CH_3)-OH$, $CH_2CH_2OCHO$, $CH_2CH_2OCOCH_3$, $CH_2CH(CH_3)OCHO$, $CH_2CH(CH_3)OCOCH_3$, $CH_2CH=CH_2$, $(CH_2)_3O(CH_2)_2O-$ 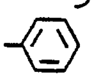 , $(CH_2)_3OCH_2-$ 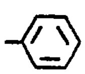 , $(C_2H_4O)_2CH_3$ oder $(C_2H_4O)_3CH_3$,

$B^2$ $CH_3$, $C_2H_5$, $C_3H_7(n)$, $C_3H_7(i)$, $C_4H_9(n)$, $C_4H_9(i)$, $CH_2CH_2OCH_3$, $CH_2CH_2OC_2H_5$, $(CH_2)_3OCH_3$, $(CH_2)_3OC_2H_5$, $CH_2CH_2OH$, $CH_2CH_2OCHO$, $CH_2CH_2OCOCH_3$, $(CH_2)_3OH$, $(CH_2)_3OCHO$, $(CH_2)_3OCOC_2H_5$, $CH_2CH(CH_3)OH$, $CH_2CH(CH_3)OCHO$ oder $CH_2CH(CH_3)OCOCH_3$, $(C_2H_4O)_2CH_3$ oder $(C_2H_4O)_3CH_3$ ein Rest

X Hydroxysulfonyl und das andere

X Nitro, Chlor, Methyl, Phenylsulfonyl,

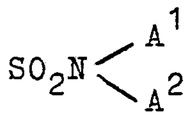 oder $SO_2NH-A^1$,

Y Wasserstoff, Chlor, Methyl,

Z Wasserstoff, Chlor, Brom, Methyl,

$A^1$ Methyl, Äthyl, (n)-Propyl, (n)-Butyl, Methoxyäthyl oder Methoxypropyl und

$A^2$ Hydroxyäthyl, Methyl, Äthyl oder (n)-Propyl

bedeuten, wobei

$A^1$ und $A^2$ zusammen mit dem Stickstoffatom einen Morpholin-, Piperidin- oder Pyrrolidinring bilden können.

Bevorzugt ist die Kombination Hydroxysulfonyl und Nitro für die Reste X.

In den folgenden Beispielen beziehen sich Angaben über Teile und Prozente, sofern nicht anders vermerkt, auf das Gewicht.

Die Beispiele 1 bis 81 beschreiben die Herstellung der erfindungsgemäß zu verwendenden Farbstoffe, in den Beispielen 82 bis 85 sind Färbeverfahren in allgemeiner Form angegeben, nach denen sie angewendet werden.

Beispiel 1

22,15 Teile 2-Amino-4-chlor-5-methylbenzolsulfonsäure werden mit 250 Raumteilen Wasser und Natronlauge bei pH 8 - 9 gelöst. Dann gibt man 32 Raumteile einer 23 %igen Natriumnitritlösung hinzu und gibt das Gemisch unter Rühren auf ein Gemisch aus 100 Teilen Wasser, 100 Teilen Eis und 30 Raumteilen konzentrierter Salzsäure. Man rührt die Diazotierung 1 1/2 Stunden bei 3 bis 7 °C, puffert sie dann mit Natriumacetat auf pH 4,6 ab und läßt dann eine Lösung von 29,2 Teilen der Kupplungskomponente der Formel

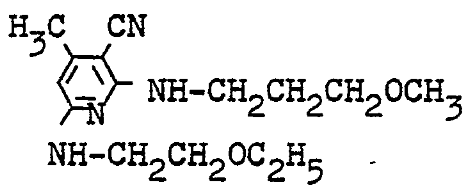

in 150 Teilen Dimethylformamid zulaufen. Die Kupplung rührt 3 Stunden bei pH 3,0 bis 4,6 nach und wird dann durch Zugabe von Natronlauge auf pH 7,0 - 8,0 gestellt. Nach Absaugen und Trocknen des ausgefallenen Farbstoffs erhält man 51,4 Teile eines orangegelben Pulvers. Der Farbstoff hat die Formel

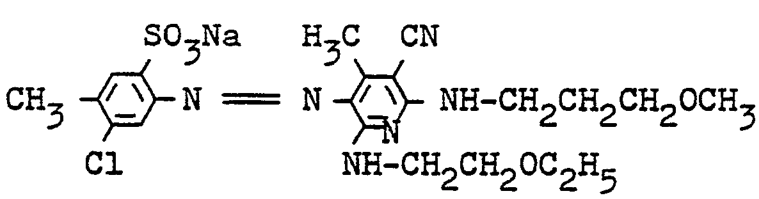

Beispiel 2

24,2 Teile 2-Amino-4,5-dichlorbenzolsulfonsäure werden in 250 Raumteilen Wasser mit Soda bei pH 7 - 8 gelöst. Dazu gibt man 32,5 Raumteile einer 23 %igen wäßrigen Natriumnitrit-Lösung und kühlt dann durch Zugabe von ca. 150 Teilen Eis auf 0 °C ab. Nach Ansäuern mit 32 Raumteilen konzentrierter Salzsäure rührt man die Diazotierung 2 Stunden bei 0 bis 6 °C nach und puffert die Suspension dann mit Natriumacetat bei pH 4,6 - 4,8 ab. Nach Zutropfen von 32 Teilen der Kupplungskomponente der Formel

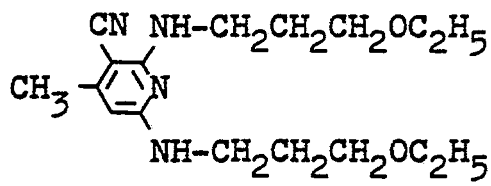

,

welche in 300 Raumteilen Dimethylformamid unter Zusatz eines Dispergiermittels gelöst sind, läßt man die Kupplung 1 Stunde bei pH 2,8 bis 4,5 nachrühren. Dann hebt man den pH-Wert der Kupplung durch Zugabe von verdünnter Natronlauge auf pH 5,0 bis 5,6 an, rührt noch eine Stunde nach, gibt erneut verdünnte Natronlauge zu, bis der pH-Wert der Kupplung 6,0 bis 7,0 beträgt und isoliert den ausgefallenen Farbstoff der Formel

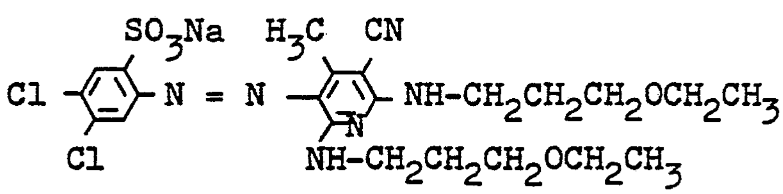

wie üblich.

Man erhält 56 Teile eines gelbbraunen Pulvers, das Lammpelz in rotstichig gelben Tönen färbt.

Beispiel 3

Diazotiert man 22,2 Teile 2-Amino-4-chlor-5-methyl-benzolsulfonsäure analog der in Beispiel 2 beschriebenen Arbeitsweise und kuppelt analog dem dort beschriebenen Verfahren auf 28,2 Teile der Kupplungskomponente der Formel

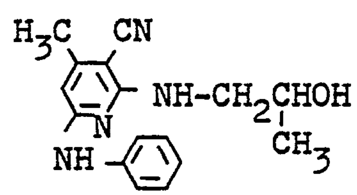

so erhält man nach Isolieren und Trocknen 50 Teile eines rotbraunen Pulvers der Formel

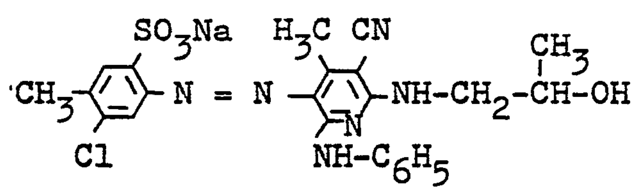 ,

das Lammpelz in orangefarbenen Tönen färbt.

Tabelle 1

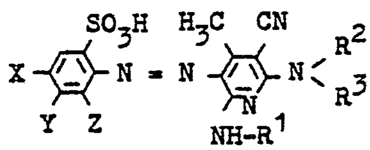

| Nr. | X | Y | Z | $R^1$ | $R^2$ | $R^3$ | Farbton |
|---|---|---|---|---|---|---|---|
| 4 | $O_2N$- | H | H | $CH_3$ | $(CH_2)_3OCH_3$ | H | rot |
| 5 | " | Cl | " | " | " | " | " |
| 6 | " | H | " | $C_2H_5$ | " | " | " |
| 7 | " | " | " | $(CH_2)_2OCH_3$ | " | " | " 496 nm |
| 8 | " | " | " | $C_2H_5$ | $(CH_2)_2OCH_3$ | $(CH_2)_2OCH_3$ | " |
| 9 | " | " | " | $(CH_2)_2OCH_3$ | $C_2H_5$ | $C_2H_5$ | " |
| 10 | " | " | " | $(CH_2)_3OCH_3$ | " | " | " |
| 11 | " | Cl | " | $(CH_2)_2OCH_3$ | $(CH_2)_3OCH_3$ | H | " |
| 12 | " | H | $CH_3$ | " | " | " | rot-braun |
| 13 | " | $CH_3$ | H | " | " | " | rot |
| 14 | " | H | Cl | " | " | " | " |

| Nr. | X | Y | Z | $R^1$ | $R^2$ | $R^3$ | Farbton |
|---|---|---|---|---|---|---|---|
| 15 | 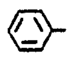 -O-$SO_2$- | H | H | $(CH_2)_3OCH_3$ | $(CH_2)_3OCH_3$ | H | gelb |
| 16 | $CH_3$- 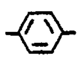 -O-$SO_2$- | " | " | " | " | " | " |
| 17 | " | " | " | $C_2H_5$ | " | " | " |
| 18 | Cl- 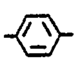 -O-$SO_2$- | " | " | " | " | " | " |
| 19 | " | " | " | " | $(CH_2)_2OCH_3$ | " | " |
| 20 | $O_2N$- | " | " | $C_4H_9(n)$ | $CH_2CH_2OH$ | " | rot |
| 21 | " | " | " | " | $CH_2CH{<}^{OH}_{CH_3}$ | " | " |
| 22 | " | " | " | $CH{<}^{C_2H_5}_{CH_3}$ | " | " | " |
| 23 | " | " | " | $CH(CH_3)_2$ | " | " | " |
| 24 | " | " | " | " | $CH_2CH_2CH_2OH$ | " | " |
| 25 | " | " | " | $CH{<}^{C_2H_5}_{CH_3}$ | $(CH_2)_2O(CH_2)_2OH$ | " | " |
| 26 | " | " | " | $C_4H_9(n)$ | " | " | " |

| Nr. | X | Y | Z | $R^1$ | $R^2$ | $R^3$ | Farb-ton |
|---|---|---|---|---|---|---|---|
| 27 | $O_2N$- | H | H | $(CH_2)_2OC_4H_9(n)$ | $(CH_2)_2OH$ | H | rot |
| 28 | " | " | " | " | $(CH_2)_3OH$ | " | " |
| 29 | " | " | " | $CH_2CH_2$- 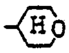 | $(CH_2)_2OCH_3$ | " | " |
| 30 | " | " | " | " | $(CH_2)_3OCH_3$ | " | " |
| 31 | " | " | " | 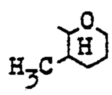 | " | " | " |
| 32 | " | " | " | " | $(CH_2)_2OH$ | " | " |
| 33 | " | " | " | " | $(CH_2)_3OH$ | " | " |
| 34 | " | " | " | $CH_2CH_2$- 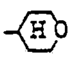 | " | " | " |
| 35 | " | " | " | $CH_2CH_2OCOCH_3$ | $(CH_2)_3OCH_3$ | " | " |
| 36 | " | " | " | $(CH_2)_3OCH_3$ | $CH_2CH_2OCOCH_3$ | " | " |
| 37 | " | " | " | $CH_2CH=CH_2$ | $(CH_2)_3OCH_3$ | " | " |
| 38 | " | " | " | " | $(CH_2)_2OCH_3$ | " | " |
| 39 | " | " | " | $CH_2CH_2CN$ | $(CH_2)_3OCH_3$ | " | " |

| Nr. | X | Y | Z | $R^1$ | $R^2$ | $R^3$ | Farbton |
|---|---|---|---|---|---|---|---|
| 40 | $O_2N$- | H | H | $CH_2CH_2$- 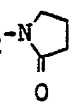 | $(CH_2)_3OCH_3$ | H | rot |
| 41 | " | " | " | $(CH_2)_5CN$ | " | " | " |
| 42 | $C_4H_9SO_2$- | " | " | $(CH_2)_3OCH_3$ | " | " | orange |
| 43 | 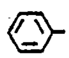- $SO_2$- | " | " | " | " | " | " |
| 44 | $CH_3$ $CH_3$ > N-$SO_2$- | " | " | " | " | " | " |
| 45 | $C_2H_5$ $C_2H_5$ > N-$SO_2$- | " | " | " | " | " | " |
| 46 | " | " | " | $(CH_2)_2OCH_3$ | $(CH_2)_2OCH_3$ | " | " |
| 47 | $C_4H_9SO_2$- | $CH_3$ | " | $(CH_2)_3OCH_3$ | $(CH_2)_3OCH_3$ | " | " |
| 48 | " | H | $CH_3$ | " | " | " | " |

Tabelle 2

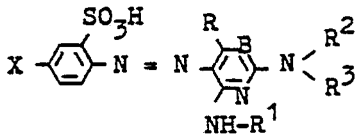

| Nr. | X | R | B | $R^1$ | $R^2$ | $R^3$ | Farbton |
|---|---|---|---|---|---|---|---|
| 49 | $O_2N-$ | $C_2H_5$ | $-C(=)-CN$ | $(CH_2)_2OCH_3$ | $(CH_2)_3OCH_3$ | H | rot 499 nm |
| 50 | " | $CH_3$ | $-C(=)-CONH_2$ | $(CH_2)_3OCH_3$ | " | " | blaustichig rot |
| 51 | " | " | " | " | $C_4H_9(n)$ | " | " |
| 52 | " | " | " | $C_4H_9(n)$ | $(CH_2)_2OCH_3$ | " | " |
| 53 | " | " | " | $C_2H_5$ | $(CH_2)_3OCH_3$ | " | " |
| 54 | " | $C_3H_7(n)$ | $-C(=)-CN$ | $(CH_2)_2OCH_3$ | $(CH_2)_2OCH_3$ | " | rot |
| 55 | " | " | " | $(CH_2)_3OCH_3$ | " | " | " |
| 56 | " | " | " | $(CH_2)_2OCH_3$ | $(CH_2)_3OCH_3$ | " | " |
| 57 | " | $CH_3$ | N | " | $CH_3$ | $CH_3$ | orange |
| 58 | " | " | " | $(CH_2)_3OCH_3$ | " | " | " |
| 59 | " | " | " | " | $C_2H_5$ | $C_2H_5$ | " |

| Nr. | X | R | B | $R^1$ | $R^2$ | $R^3$ | Farbton |
|---|---|---|---|---|---|---|---|
| 60 | $O_2N-$ | $CH_3$ | N | $(CH_2)_3OH$ | $C_2H_5$ | $C_2H_5$ | orange |
| 61 | " | " | " | $(CH_2)_2OH$ | " | " | " |
| 62 | " | " | " | $CH_2CH{<}^{OH}_{CH_3}$ | " | " | " |
| 63 | $CH_3SO_2-$ | " | " | $(CH_2)_3OH$ | $(CH_2)_3OCH_3$ | H | " |
| 64 | $O_2N-$ | " | $-\underset{\|}{C}-CN$ | $(CH_2)_3OCH_3$ | $(CH_2)_3OCH_3$ | " | rot 498 nm |
| 65 | " | " | N | $CH_2CH{<}^{OH}_{CH_3}$ | | 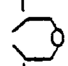 | orange |
| 66 | " | " | " | $(CH_2)_3OH$ | | " | " |

Tabelle 3

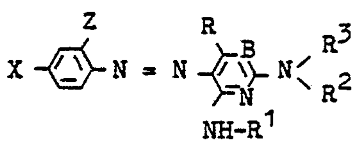

| Nr. | X | Z | B | R | $R^1$ | $R^2$ | $R^3$ | Farbton |
|---|---|---|---|---|---|---|---|---|
| 67 | $HO_3S$ | $NO_2$ | $=C-CN$ | $CH_3$ | H | $(CH_2)_3O(CH_2)_4OH$ | H | braun |
| 68 | " | " | " | " | $(CH_2)_3OCH_3$ | $(CH_2)_3OCH_3$ | " | rot-braun |
| 69 | $O_2N$ | $SO_3H$ | " | H | " | " | " | rot 496 nm |
| 70 | $HO_3S$ | $NO_2$ | " | $CH_3$ | $CH(CH_3)-C_2H_5$ | $(C_2H_4O)CH_3$ | " | rot |
| 71 | " | " | " | " | " | $(CH_2)_3OCH_3$ | " | " |
| 72 | " | " | " | " | " | $C_6H_5$ | " | rot-braun |
| 73 | " | " | N | " | $(CH_2)_3OH$ | $C_2H_5$ | $C_2H_5$ | gelb |
| 74 | " | " | $-C-CN$ | " | $CH_3$ | $(CH_2)_3OCH_3$ | H | braun |
| 75 | " | " | " | " | $CH(CH_3)_2$ | " | " | " |
| 76 | " | " | " | " | H | $CH_2-CH(OH)-CH_3$ | " | " |

| Nr. | X | Z | B | R | $R^1$ | $R^2$ | $R^3$ | Farbton |
|---|---|---|---|---|---|---|---|---|
| 77 | $O_2N$ | $SO_3H$ | $-\underset{\|}{C}-CN$ | H | $(CH_2)_3OCH_3$ | $(CH_2)_3OCH_3$ | H | rot |
| 78 | " | " | " | $NH(CH_2)_2OCH_3$ | $(CH_2)_2OCH_3$ | $C_2H_5$ | " | " |
| 79 | " | " | " | $NH-C_2H_5$ | $C_2H_5$ | $(CH_2)_2OCH_3$ | " | " |
| 80 | " | " | " | " | " | $(CH_2)_3OCH_3$ | " | " |
| 81 | " | " | " | $NH(CH_2)_3OCH_3$ | H | " | " | gelbstichig rot |

## Beispiel 82
## Rot-Kupfer auf Spitznutriafellen in der Haspel

Material: Chromnachgegerbte Spitznutriafelle

Flotte: 1 : 25 berechnet auf Trockengewicht der Felle

Färberezeptur

| | | | |
|---|---|---|---|
| Tötung: | 5 | g/l | Natriumdithionit |
| | 5 | g/l | Soda calc. |
| | 0,5 | ml/l | oxethyliertes Fettsäureamid |
| | Wasser 32 °C, 4 Stunden; spülen. | | |
| Färbung: | 1 | ml/l | oxethyliertes Fettamin |
| | 10 | g/l | Glaubersalz |
| | 0,5 | g/l | Beispiel 36 |
| | 1 | g/l | C.I. Acid Orange 3 |
| | Wasser 65 °C, 15 Minuten | | |
| | + 1 | ml/l | Ameisensäure 85 %ig |
| | 30 Minuten | | |
| | + 0,5 | ml/l | Ameisensäure 85 %ig |
| | 1 Stunde; spülen | | |
| Nachfettung: | 2-4 | g/l | Pelzfettungsmittel |
| | Wasser 40 °C, 30 Minuten; zentrifugieren, trocknen, läutern, schütteln, stollen. | | |

Beispiel 83

Braun- bzw. Graufärbung Leder und Wolle

Ton-in-Ton auf Schaffellen (Pelzvelours)

Material: Chromgegerbte Pelzschaffelle

a) Färbung der Wolle in der Haspel: Flotte 1 : 20

b) Färbung des Pelzleders im Faß: Flotte 1000 %

(Flottenangaben bezogen auf Trockengewicht der Felle)

Färberezeptur

a) Wollfärbung in der Haspel

Netzbad: 1 - 3 g/l Soda calc.

1 - 3 g/l Pelzwaschmittel

Wasser 35 °C, 1 Stunde; spülen

| Färbung: | | Braun | Grau |
|---|---|---|---|
| Oxethyliertes Fettamin | ml/l | 1 | 1 |
| Wasser 60 °C | | | |
| nach 15 Minuten Zusatz: | | | |
| Färbereihilfsmittel (Neutralsalze aromatischer Sulfosäuren) | g/l | 1 | 1 |
| C.I. Acid Orange 3 | g/l | 0,4 | 0,08 |
| C.I. Acid Blue 25 | g/l | 0,1 | 0,1 |
| Beispiel 25 | g/l | 0,1 | 0,05 |
| nach 15 Minuten Zusatz: | | | |
| Ameisensäure 25 %ig | ml/l | 1 | 1 |

| | | | |
|---|---|---|---|
| 1 Stunde; spülen. | | | |
| Neutralisation: | | | |
| Natriumformiat | g/l | 2 | 2 |
| Natriumbicarbonat | g/l | 1 | 1 |
| Wasser 35 °C | | | |
| 3 Stunden; spülen. | | | |

b) <u>Lederfärbung im Faß</u>

| | | | |
|---|---|---|---|
| Färbereihilfsmittel (Tensidmischung) | % | 1 | 1 |
| Ammoniak 25 %ig | % | 2 | 2 |
| Anionisches Pelz-fettungsmittel | % | 1 | 1 |
| Wasser 35 °C | % | 1000 | 1000 |
| nach 30 Minuten Zusatz: | | | |
| C.I. Acid Brown 165 | % | 2 | - |
| C.I. Acid Brown 75 | % | 0,5 | - |
| C.I. Acid Black 82 | % | 0,5 | - |
| C.I. Acid Black 83 | % | - | 2,4 |
| nach 2 Stunden Zusatz: | | | |
| Ameisensäure 85 %ig | % | 2 | 2 |

1 Stunde; spülen.
Gegebenenfalls Waschbad und Nachfettung.

Beispiel 84

Schwarzfärbungen auf Kanin-, Lamm- oder Schaffellen in der Haspel

Material: Chromgegerbte Pelzfelle

Flotte: 1 : 20 bis 1 : 25 berechnet auf Trockengewicht der Felle

Färberezeptur

Netzbad: 1 - 2 g/l Soda calc.
0,5 ml/l oxethyliertes Fettsäureamid

Wasser 32 °C, 1 - 2 Stunden; spülen.

| Färbung: | | 1 | 2 |
|---|---|---|---|
| Oxethyliertes Fettamin | ml/l | 1 | 1 |
| C.I. Acid Blue 25 | g/l | 2,4 | 3,5 |
| Beispiel 15 | g/l | - | 1,8 |
| Beispiel 29 | g/l | - | 0,75 |
| Beispiel 61 | g/l | 4,0 | - |
| Ameisensäure 85 %ig | ml/l | 2 | 2 |
| Wasser 60 - 65 °C, nach 30 Minuten Zusatz Ameisensäure 85 %ig | ml/l | 2 | 2 |

1 Stunde; spülen.

Beispiel 85
Beigefärbung auf Lamm- und Schaffellen im Mischer oder in Färbemaschinen

Material: Chromgegerbte Pelzfelle

Flotte: Prozentangaben bezogen auf Trockengewicht der Felle.

Färberezeptur

| | | |
|---|---|---|
| Netzbad: | 0,5 - 1 % | Soda calc. |
| | 0,5 - 1 % | oxethyliertes Fettamin |
| | 600 - 800 % | Wasser 35 °C |
| | 1 Stunde; spülen. | |
| Färbung: | 1 % | oxethyliertes Fettamin |
| | 0 - 1 % | Färbereihilfsmittel (Neutralsalze aromatischer Sulfosäuren) |
| | 0,16 % | C.I. Acid Orange 3 |
| | 0,04 % | C.I. Acid Blue 25 |
| | 0,04 % | Beispiel 56 |
| | 0,5 % | Ameisensäure 85 %ig |
| | 600 - 800 % | Wasser 60 °C |
| | 1 Stunde; spülen. | |

Patentansprüche

1. Verfahren zum Färben der Wolle von Pelzfellen, dadurch gekennzeichnet, daß man als Farbstoffe Verbindungen verwendet, die in Form der freien Säuren der allgemeinen Formel

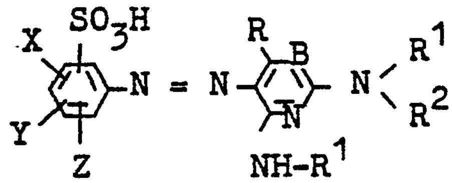

entsprechen, in der

B 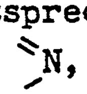, 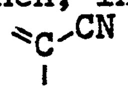 oder 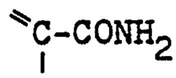 ,

R Wasserstoff, Methyl, Äthyl, $NHR^3$, Propyl, die Reste

$R^3$ Wasserstoff, Methyl, Äthyl, n- und i-Propyl, n- und i-Butyl, Methoxyäthyl, Äthoxyäthyl, Butoxyäthyl, Methoxypropyl und Äthoxypropyl,

$R^1$ gegebenenfalls durch Sauerstoff unterbrochenes und durch Hydroxy, $C_1$- bis $C_4$-Alkoxy, Carboxy, $C_1$- bis $C_8$-Alkoxycarbonyl, $C_1$- bis $C_8$-Alkanoyloxy, Cyan, $C_1$- bis $C_8$-Alkanoylamino, Cyclohexyl oder Phenyl substituiertes $C_1$- bis $C_8$-Alkyl, Allyl, Cycloalkyl, Norbornyl, ω-Pyrrolidino-$C_2$- bis $C_6$-alkyl, Phenyl-$C_1$- bis $C_4$-alkyl, Tolyl-$C_1$- bis $C_4$-alkyl,

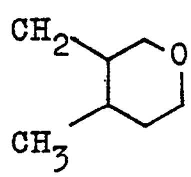 , 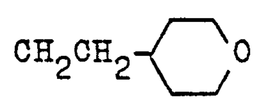

oder $CH_2CHC_6H_5$, OH

ein Rest $R^1$ auch Wasserstoff, Phenyl, Tolyl, Methoxyphenyl, Äthoxyphenyl oder Dimethylphenyl,

$R^2$ Wasserstoff, Methyl, Äthyl, Hydroxyäthyl oder $C_2$- bis $C_4$-Alkoxyalkyl,

$R^1$ und $R^2$ zusammen mit dem Stickstoff Pyrrolidino, Piperidino, Morpholino, Piperazino, N-Methylpiperazino, N-ß-Hydroxyäthylpiperazino oder N-Acetylpiperazino,

X Wasserstoff, Chlor, Brom, Nitro, Cyan, $C_1$- bis $C_8$-Alkylsulfonyl, Phenylsulfonyl, Chlorphenylsulfonyl, Tolylsulfonyl, Trifluormethyl, Carboxyl, Methyl, Äthyl, Methoxy, Äthoxy, einen Rest der Formel

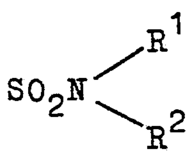 , Sulfonsäurearylester, gegebenenfalls substituiertes Oxdiazolyl oder Carbonsäureester mit 1 bis 6 C-Atomen im Alkoholrest,

Y Wasserstoff, Chlor, Brom, Methyl oder Methoxy und

Z Wasserstoff, Chlor oder Methyl

bedeuten.

2. Verfahren gemäß Anspruch 1, <u>dadurch gekennzeichnet</u>, daß man Farbstoffe der Formel

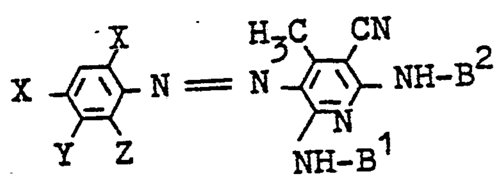

verwendet, in der

$B^1$ Wasserstoff, $CH_3$, $C_2H_5$, $C_3H_7(n)$, $C_3H_7(i)$, $C_4H_9$, $\underset{CH_3}{CH}-C_2H_5$, $CH_2CH_2OCH_3$, $CH_2CH_2OC_2H_5$, $CH_2CH_2CH_2OCH_3$, $CH_2CH_2CH_2OC_2H_5$, $(CH_2)_3O(CH_2)_2OCH_3$, $(CH_2)_3O(CH_2)_2OC_2H_5$, $(CH_2)_3O(CH_2)_2OC_4H_9$, $CH_2CH_2OH$, $CH_2CH_2CH_2OH$, $CH_2\underset{CH_3}{CH}-OH$, $CH_2CH_2OCHO$, $CH_2CH_2OCOCH_3$, $CH_2\underset{CH_3}{CH}OCHO$, $CH_2\underset{CH_3}{CH}OCOCH_3$, $CH_2CH{=}CH_2$, $(CH_2)_3O(CH_2)_2O-$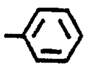 oder $(CH_2)_3OCH_2-$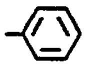, $(C_2H_4O)_2CH_3$ oder $(C_2H_4O)_3CH_3$

$B^2$ $CH_3$, $C_2H_5$, $C_3H_7(n)$, $C_3H_7(i)$, $C_4H_9(n)$, $C_4H_9(i)$, $CH_2CH_2OCH_3$, $CH_2CH_2OC_2H_5$, $(CH_2)_3OCH_3$, $(CH_2)_3OC_2H_5$, $CH_2CH_2OH$, $CH_2CH_2OCHO$, $CH_2CH_2OCOCH_3$, $(CH_2)_3OH$, $(CH_2)_3OCHO$, $(CH_2)_3OCOC_2H_5$, $CH_2\underset{CH_3}{CH}OH$, $CH_2\underset{CH_3}{CH}OCHO$ oder $CH_2\underset{CH_3}{CH}OCOCH_3$, $(C_2H_4O)_2CH_3$ oder $(C_2H_4O)_3CH_3$ ein Rest

X Hydroxysulfonyl und das andere

X Nitro, Chlor, Methyl, Phenylsulfonyl, $SO_2N\begin{smallmatrix} A^1 \\ A^2 \end{smallmatrix}$ oder $SO_2NH-A^1$,

Y Wasserstoff, Chlor, Methyl,

Z Wasserstoff, Chlor, Brom, Methyl,

$A^1$ Methyl, Äthyl, (n)-Propyl, (n)-Butyl, Methoxyäthyl oder Methoxypropyl und

$A^2$ Hydroxyäthyl, Methyl, Äthyl oder (n)-Propyl bedeuten, wobei $A^1$ und $A^2$ zusammen mit dem Stickstoffatom einen Morpholin-, Piperidin- oder Pyrrolidinring bilden können.